Europäisches Patentamt

European Patent Office

Office européen des brevets

(11) Veröffentlichungsnummer : **0 116 964**
**B1**

(12) EUROPÄISCHE PATENTSCHRIFT

(45) Veröffentlichungstag der Patentschrift :
15.06.88

(51) Int. Cl.⁴ : **B 60 N 1/06**

(21) Anmeldenummer : 84101632.2

(22) Anmeldetag : 17.02.84

(54) Verstellvorrichtung mit Schrittschalttechnik.

(30) Priorität : 19.02.83 DE 3305828

(43) Veröffentlichungstag der Anmeldung :
29.08.84 Patentblatt 84/35

(45) Bekanntmachung des Hinweises auf die Patenterteilung : 15.06.88 Patentblatt 88/24

(84) Benannte Vertragsstaaten :
DE FR GB SE

(56) Entgegenhaltungen :
DE-A- 1 530 519
DE-A- 3 115 942
DE-B- 1 227 788
DE-B- 1 297 496
DE-C- 938 050
FR-A- 2 395 858
FR-A- 2 503 061
US-A- 3 079 199

(73) Patentinhaber : C. Rob. Hammerstein GmbH
Postfach 13 01 18 Merscheiderstrasse 167
D-5650 Solingen 13 (DE)

Firma Daimler-Benz AG
Postfach
D-7000 Stuttgart 60 (DE)

(72) Erfinder : Bauer, Heinz
Hammerstrasse 9
D-5650 Solingen 11 (DE)
Erfinder : Becker, Burckhard, Dipl.-Ing.
Obenkatternberg 25
D-5650 Solingen (DE)
Erfinder : Frohnhaus, Ernst-Reiner
Hammerstrasse 13
D-5650 Solingen 11 (DE)
Erfinder : Gedig, Alfred, Dipl.-Ing.
Hammerstrasse 28
D-5650 Solingen 11 (DE)
Erfinder : Klink, Joseph Dipl.-Ing.
Im Kranich 5
D-7270 Nagold (DE)
Erfinder : Koucky, Antonin
Ernst-Barlach-Str. 81
D-7032 Sindelfingen (DE)

(74) Vertreter : Bauer, Wulf, Dr.
Wolfgang-Müller-Strasse 12
D-5000 Köln 51 (Marienburg) (DE)

**Beschreibung**

Die Erfindung bezieht sich auf eine Verstellvorrichtung mit Schrittschaltmechanik, insbesondere für eine Sitzhöhenverstellung oder Rückenlehnen-Neigungsverstellung von Kraftfahrzeugsitzen,

a) mit einer Basisplatte, in der eine Achse gelagert ist,

- deren Drehposition bezüglich der Basisplatte schrittweise verstellbar ist, und

- die mit einem Mitnehmerflanken aufweisenden Antriebsrad verbunden ist, und

b) mit einem an der Basisplatte bewegbar angeordneten Verstellarm,

- der mit einem Handhebel verbunden ist,

- von einer ihn in seiner Mittelstellung haltenden Feder beaufschlagt ist und

- einen Mitnehmer aufweist, der beim Verschwenken des Handhebels eine Mitnehmerflanke des Antriebsrades mitnimmt und dadurch das Antriebsrad dreht.

Bei dieser aus der DE-A-31 15 942 bekannten Verstellvorrichtung wird die Einstellung durch Hin- und Herschwenken (« Pumpen ») des Handhebels vorgenommen. Der Handhebel ermöglicht dabei eine relativ großə und günstige Kraftübersetzung der manuell eingeleiteten Kräfte. Demgegenüber greift die Stellkraft bei einer mit Handrad ausgerüsteten Verstellvorrichtung, wie sie beispielsweise aus der DE-B-12 97 496 bekannt ist, über einen kürzeren Hebelarm an, was unter anderem dazu führt, daß bei dieser Verstellvorrichtung für eine vorgegebene Winkelverstellung der Achse eine relativ hohe Anzahl von Umdrehungen des Handrades durchgeführt werden müssen. Bei der Verstellvorrichtung der eingangs genannten Art läßt sich der Handhebel zudem griffgünstig anordnen, da sein Handgriff einen Abstand von dem Ort hat, an dem sich die Achse befindet. Die Verstellvorrichtung der eingangs genannten Art hat mithin ergometrische Vorteile.

Nachteilig bei der Verstellvorrichtung der eingangs genannten Art ist jedoch die Tatsache, daß die Verstellvorrichtung nicht selbst arretierend ist, somit lediglich eine Verstellung ermöglicht, die erreichte Verstellung aber nicht hält. Hierfür ist der bekannten Verstellvorrichtung ein selbsthemmendes Getriebe nachgeschaltet, das im Rückweg angreifende Kräfte, also Kräfte, die über die eingestellte Rückenlehne oder eine Sitzfläche durch einen Benutzer eingeleitet werden, von der bekannten Verstellvorrichtung fernhält.

Ein derartiges selbsthemmendes Getriebe erfordert jedoch zusätzliche Bauteile und muß stets unter Beachtung einer Selbsthemmung ausgelegt sein, kann also nicht frei den jeweiligen, optimalen Übersetzungsverhältnissen angepaßt werden.

Hiervon ausgehend ist es Aufgabe der Erfindung, unter Beibehaltung der Vorteile der bekannten, schrittweise arbeitenden Verstellvorrichtung mit Handhebel deren Nachteile zu vermeiden und eine Verstellvorrichtung der eingangs genannten Art anzugeben, bei der ein selbsttätiges Arretieren der erreichten Schaltschritte möglich ist.

Diese Aufgabe wird ausgehend von einer Verstellvorrichtung der eingangs genannten Art dadurch gelöst, daß das Antriebsrad Rastflanken aufweist, deren Anzahl gleich der Anzahl der Mitnehmerflanken ist, daß an der Basisplatte mindestens eine Rastklinke angelenkt ist, die durch eine Klinkenfeder in Richtung einer Anlage an eine Rastflanke vorbelastet ist und die eine von einer Steuerfläche des Verstellarms betätigbare Ausrastfläche aufweist, und daß der Verstellarm mit einem Führungsteil in einer Führung der Basisplatte angeordnet ist, die den Bewegungsbereich des Verstellarms in Gegenrichtung zur Zugrichtung der Feder und in beiden Richtungen quer hierzu begrenzt.

Bei dieser Verstellvorrichtung hat der Verstellarm keine ortsfeste Schwenkachse, wie bei der bekannten Verstellvorrichtung der eingangs genannten Art, der Verstellarm ist vielmehr schwimmend gelagert, wird durch die Feder in einer vorgegebenen Position, der Mittelstellung, gehalten und kann sowohl um seinen Mitnehmer als auch um sein Führungsteil verschwenkt werden. Diese unterschiedlichen Bewegungen werden dazu benutzt, zunächst die in Mittelstellung auf Grund der mindestens einen Rastklinke erreichte Arretierung aufzuheben und sodann eine Antriebsdrehbewegung auf das Antriebsrad zu übertragen. Dabei rastet die Rastklinke nach Erreichen einer neuen Rastflanke selbsttätig ein und beendet dadurch den Schwenkweg des Handhebels. Bei dem Rückweg aus dieser Endposition des Schwenkweges in die Mittelstellung hat der Verstellmechanismus dieselbe Zuordnung und Anordnung seiner einzelnen Teile, lediglich die Achse ist um ein gewisses Maß, beispielsweise einen Winkel von 60° gedreht. Ansonsten ist die nunmehr erreichte Mittelstellung nicht von der Ausgangs-Mittelstellung zu unterscheiden. Anders ausgedrückt ist mit der Verstellvorrichtung jede beliebige Anzahl von Drehungen der Achse zu erreichen, falls ausreichend oft ein Hub mit dem Handhebel durchgeführt wurde. Die Drehung in Gegenrichtung wird durch ein Verschwenken des Handhebels ausgehend von der Mittelstellung in die andere Schwenkrichtung erreicht. Hierbei spielen sich dieselben mechanischen Vorgänge wie bei der soeben geschilderten Drehbewegung der Achse in die erste Richtung ab.

Die Verstellvorrichtung läßt sich aus Blechstanzteilen sehr flach aufbauen, sie kann zudem auch leichtgewichtig ausgeführt werden. Ihre Abmessungen werden im wesentlichen durch die Abmessungen des Antriebsrades bestimmt, für das sich ein Durchmesser von etwa fünf Zentimetern als geeignet herausgestellt hat.

Die Verstellvorrichtung läßt sich neben den genannten, vorzugsweisen Einsatzbereichen bei Kraftfahrzeugsitzen vorteilhaft überall da einsetzen, wo manuell eine Drehbewegung angetrieben und eine Drehposition arretiert werden muß, zum Beispiel bei der Neigungseinstellung von Bettgestellen, bei Winden, wenn auf der Achse eine Seiltrommel befestigt wird und dergleichen.

In vorteilhafter Ausbildung sind in Mittelstellung des Verstellarms die Zugrichtung der Feder, der Mitnehmer, die Achse und das Führungsteil in dieser Reihenfolge angeordnet und liegen auf einer Geraden. Dies ermöglicht eine weitgehend klappsymmetrische Ausbildung der Verstellvorrichtung und gleichgroße Verstellkräfte in beiden Schwenkrichtungen.

Die Mitnehmerflanken sind vorteilhafterweise als Teil des Innenrandes einer sternförmigen Ausnehmung des Antriebsrades ausgebildet. Je zwei zueinander gekehrte Mitnehmerflanken bilden dabei eine Mitnehmerbucht, in die der Mitnehmer unter dem Zug der Feder einrastet. Die einzelnen Buchten sind vorteilhafterweise durch abgerundete Übergangsbereiche verbunden, die eine günstige Führung des Mitnehmers von einer Rastbucht in die nächte erlauben.

Die Rastflanken befinden sich vorteilhafterweise am Außenrand des Antriebsrades und verlaufen im wesentlichen radial, wodurch nahezu rechteckige Rastbuchten ausgebildet werden. Dabei entspricht die Anzahl der Rastbuchten der Anzahl der Buchten der Mitnehmerflanken.

Besonders bevorzugt wird eine Ausführung mit zwei Rastklinken. Jede einzelne Rastklinke sperrt dabei lediglich eine Drehrichtung. Nur die die jeweils gewünschte Verstellrichtung blockierende Rastklinke wird aktiv beim Verschwenken des Verstellarms aus der Mittelstellung in die Freigabestellung ausgeklinkt, die andere Rastklinke wird durch Anschlag an eine ihr nicht zugeordnete Rastflanke in Freigabestellung ausgeschwenkt. Bei dieser Ausführung kann die Breite der Rastzähne der Rastklinken deutlich kleiner gewählt werden als die Breite einer rechteckigen Rastbucht, wodurch stets eine sichere Einrastung, auch bei gewissen Relativgeschwindigkeiten zwischen Verstellrad und Rastklinke, gewährleistet ist. Rastklinken mit unabhängig voneinander einrastfähigen Rastzähnen entsprechend der DE-A-27 29 770 werden bevorzugt.

Andererseits ist die Ausbildung der Verstellvorrichtung mit nur einer Rastklinke möglich, wobei sich Steuerfläche und Ausrastfläche der Rastklinke auf der angegebenen Geraden, auf der auch die Achse und das Führungsteil liegen, befinden.

In zweckmäßiger Ausführung ist der Verstellarm als Doppelarm ausgebildet, ein Arm trägt den Mitnehmer und weist einen Befestigungspunkt für die als Zugfeder ausgebildete Feder auf, in Richtung dieses Rastarms wird der Doppelarm also vorbelastet. Der andere Arm trägt das Führungsteil. Dieses Führungsteil bildet vorteilhafterweise zugleich die Steuerflächen für die Betätigung der Rastklinken.

Weitere Vorteile und Merkmale der Erfindung ergeben sich aus der nun folgenden Beschreibung bevorzugter, jedoch nicht einschränkend zu verstehender Ausführungsbeispiele, die unter Bezugnahme auf die Zeichnung näher erläutert werden. In dieser zeigen :

Fig. 1 eine Seitenansicht einer Verstellvorrichtung in einer Ausführung als Neigungsverstellvorrichtung,

Fig. 2 ein Schnitt entlang der Schnittlinie II-II in Fig. 1, und

Fig. 3 eine Darstellung entsprechend Fig. 1 einer Verstellvorrichtung mit Blockierhebel.

Mittels der gezeigten Verstellvorrichtung mit Schrittmechanik kann die Neigung einer Basisplatte 20 eingestellt werden. Dabei ist diese Basisplatte beispielsweise Teil eines Sitzrahmens, dessen Neigung einzustellen ist. Sie ist, was für die vorliegende Erfindung jedoch unbeachtlich ist, um eine ortsfeste Achse 22 schwenkbar.

In der Basisplatte 20 ist eine Achse 24 gelagert, die außen ein Ritzel 26 trägt. Dieses kämmt mit einer ortsfesten Zahnstange 28. Beim Drehen der Achse 24 fährt das Ritzel 26 die Zahnstange 28 herauf oder herab, wobei eine Einstellung in vorgegebenen Abstufungen möglich ist. Anstelle eines Ritzels 26 kann die Achse 24 aber auch mit einem Arm verbunden sein, der direkt oder indirekt die Neigung eines schwenkbaren Teils, zum Beispiel einer Rückenlehne, bestimmt. Weiterhin kann an einer Zahnstange ein Zahnrad vorgesehen sein, das je nach Übersetzung gegenüber dem Ritzel 26, mit dem es kämmt, in Winkelstufen eingestellt werden kann. Hierbei wird eine Untersetzung der 60° betragenden Drehwinkel der Achse 24 zwischen zwei Schaltpositionen der Verstellvorrichtung erreicht. Ein Ritzel, eine Über- oder Untersetzung sind jedoch grundsätzlich für die Verstellvorrichtung nicht erforderlich.

Die Achse 24 ist mit einem Antriebsrad 30 verbunden, das eine sternförmige, zentrische Ausnehmung 32 hat, deren Ränder Mitnehmerflanken 34, 36 bilden. Insgesamt sind je sechs Mitnehmerflanken 34 für eine Drehrichtung und sechs Mitnehmerflanken 36 für die andere Drehrichtung vorgesehen. Dabei bilden jeweils zwei Mitnehmerflanken 34, 36 eine Bucht 38, die insgesamt sechs Buchten 38 sind durch sechs abgerundete Übergangsbereiche 40 miteinander verbunden.

Das Antriebsrad hat weiterhin auf seinem kreisrunden Außenrand sechs Rastbuchten 42, die jeweils durch Rastflanken 44, 46 begrenzt werden. Diese verlaufen radial. Die Rastbuchten 42 erstrecken sich über etwa 15° Bogenwinkel, wodurch zwischen den Rastbuchten 42 ein relativ langer Bogenbereich 48 bleibt.

An der Basisplatte 20 sind Bolzen 50 befestigt, die zusammen mit der Achse 24 die Ecken eines hier gleichseitigen, insbesondere aber gleichschenkligen Dreiecks bilden. Um jeden der zwei Bolzen 50 ist jeweils eine Rastklinke 52 schwenkbar, die in der gezeigten Mittelstellung der Verstellvorrichtung jeweils in Anlage an einer Rastflanke 44 bzw. 46 sind, wodurch das Antriebsrad 30 und damit die Drehbewegung der Achse 24 gesperrt sind. Die Verstellvorrichtung ist somit arretiert.

An der Basisplatte 20 ist weiterhin ein Verstellarm 54 verschwenkbar gehalten, er ist « schwimmend » gelagert. Er hat einen als Zapfen 56 ausgebildeten Mitnehmer, der in die sternförmige Ausnehmung 32 ragt und sich in der gezeigten Mittelstellung in Eingriff in der links außen befindlichen Bucht 38 befindet. In diese Bucht wird er mittels einer als Zugfeder ausgebildeten Feder 58 gehalten, die den Verstellarm 54 nach links zieht. Die Feder 58 stützt sich ihrerseits auf der Basisplatte 20 ab. Der Verstellarm 54 ist in seiner Mitte mit einem Handhebel 60 verbunden. Der Verstellarm 54 kann daher auch als zweiarmiger Hebel bezeichnet werden, wobei der Angriffspunkt der Feder 58 und dem Zapfen 56 sich auf dem einen Arm befinden. Der andere Arm trägt ein Führungsteil 62, das in eine starr mit der Basisplatte 20 verbundene Führung 64 ragt. Diese ist als Öffnung ausgebildet und beschränkt den freien Bewegungsbereich des Verstellarms 54. Andere Arten der Führung als die hier gezeigte sind möglich, weshalb die allgemeinen Begriffe Führung und Führungsteil benutzt werden.

Das Führungsteil 62 bildet zugleich je eine Steuerfläche 66 für die Ausrastbewegung je eines der beiden Rastklinken 52. Diese haben eine der jeweiligen Steuerfläche 66 gegenüber liegende Ausrastfläche 68, die sich bezogen auf den Bolzen 50 auf derselben Seite der Rastklinke 52 wie der Klinkenzahn selbst befindet. Die Rastklinken sind schließlich durch eine (hier nicht eingezeichnete) Klinkenfeder in Raststellung vorbelastet und gehalten.

Die als Öffnung ausgebildete Führung ist in einem Halteblech 70 aufgeführt, das mittels der Bolzen 50 mit der Basisplatte 20 verbunden ist und zugleich ein zweites Lager für die Achse 24 bildet. Der Verstellarm 54 ist im Bereich des Durchtritts der Achse 24 ausgespart, um eine Schwenkbewegung des Verstellarms 54, die im folgenden näher beschrieben wird, zu ermöglichen. Die als Öffnung 64 ausgebildete Führung kann auch in der Basisplatte 20 vorgesehen sein. Die Führung kann weiterhin durch Vorsprünge, Ausnehmungen oder dergleichen realisiert werden, solange hierdurch die im folgenden beschriebenen Bewegungen des Verstellarms 54 begrenzt und ermöglicht werden:

In der gezeigten Position befinden sich der Verstellarm 54 und damit die Verstellvorrichtung in der Mittelposition. Feder 58, Bucht 30, Zapfen 56, Achse 24 und Führungsteil 62 befinden sich in dieser Reihenfolge angeordnet auf einer Geraden, die zugleich im wesentlichen die Klappsymmetrie der Verstellvorrichtung (bis auf den Handhebel 60) festlegt. Wird nun ausgehend von dieser Mittelstellung der Handhebel 60 in eine Richtung, beispielsweise nach links geschwenkt, so schwenkt der Verstellarm 54 um den Zapfen 56, bis die obere Steuerfläche 66 an die Ausrastfläche 68 der oberen Rastklinke 52 anschlägt und diese bei fortgesetzter Schwenkbewegung in die Freigabestellung bringt. Das Antriebsrad 30 ist nun gegen eine Linksdrehung (mathematisch negativ) nicht mehr durch eine Rastklinke arretiert. Die Schwenkbewegung des Verstellarms 54 um den Zapfen 56 als Drehpunkt wird dann beendet, wenn das Führungsteil 62 und im gezeigten Ausführungsbeispiel zugleich die Steuerfläche 66 gegen einen Seitenrand 72 der Führung 64 anschlagen. Dieser Seitenrand 72 verläuft parallel zur genannten Geraden. Wenn das Führungsteil 62 an ihm anliegt, erfolgt die weitere Schwenkbewegung um die Steuerfläche 66, dabei wird der Zapfen 56 nach unten auf einer Bogenlinie bewegt und dreht das Antriebsrad 30 nach links mit. Während dieser Antriebsbewegung rutscht die Steuerfläche 66 nach rechts am Seitenrand 72 entlang, wodurch sie von der Ausrastfläche 68 im wesentlichen freikommt, so daß die obere Rastklinke 52 nicht mehr gesteuert ausgerastet ist, sondern belastet durch ihre Klinkenfeder auf dem Bogenbereich 48 aufliegt. Sie rastet dadurch in die nächstfolgende Rastbucht 42 ein, sobald sich diese mit fortgesetzter Drehung des Antriebsrades 30 unter ihr befindet.

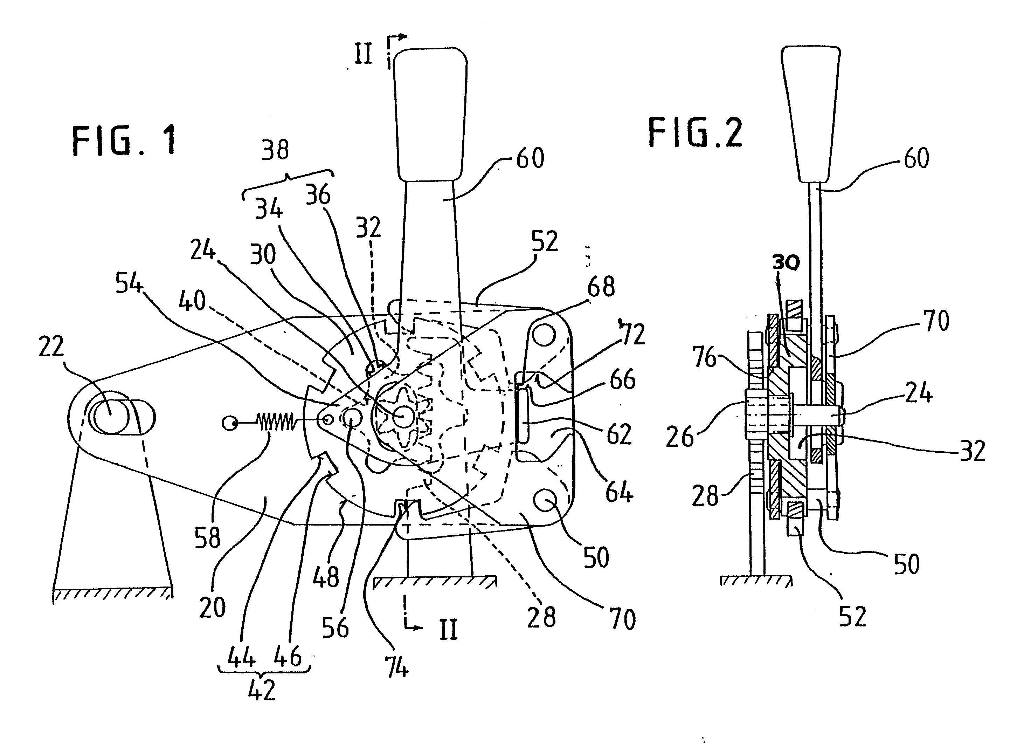

Die untere Rastklinke 52 ist während der Drehbewegung des Antriebsrades 30 dadurch außer Eingriff mit der Rastbucht 42 gekommen, mit der sie in Figur 1 zusammenwirkt, daß eine Schrägfläche 74 an die Rastflanke 44 anschlägt und dadurch die untere Rastklinke 52 auf einen Bogenbereich 48 gehoben wird. Auch die untere Rastklinke 52 rastet in die nächste Rastbucht 42 ein, wenn sich diese oberhalb von ihr befindet.

Der Antrieb des Antriebsrades 30 wird dadurch beendet, daß die Rastklinken 52 in die jeweils nächstfolgende Rastbucht 42 eingreifen. Dann kann der Handhebel 60 nicht mehr in die betrachtete Richtung, also nach links weitergeschwenkt werden. Er wird vom Benutzer wieder in die Mittellage zurückgeholt, wobei diese Bewegung größtenteils durch die Feder 58 unterstützt wird und bei geeigneter Ausbildung der Buchten 38 selbsttätig erfolgt. Letzteres wird angestrebt. Damit ist die in Figur 1 gezeichnete Mittelstellung wieder erreicht. Die gegenüber dieser Mittelstellung um den Zapfen 56 verschwenkte Position des Verstellarmes 54, bei der dieser an einem Seitenrand 72 anliegt, wird als Freigabestellung bezeichnet. In der Antriebsstellung schwenkt der Verstellarm 54 um sein Führungsteil, also die Steuerfläche 66.

Bei einem Schwenken des Handhebels 60 nach rechts laufen die beschriebenen Vorgänge entsprechend ab.

Gegenüber dem gezeichneten und beschriebenen Ausführungsbeispiel sind viele Änderungen, insbesondere kinematische Umkehrungen, möglich, die ebenfalls zur Erfindung gehören. So ist die Ausbildung der Führung 60, wie schon angegeben, in weiten Bereichen frei. Die Buchten 38 können am Außenrand des Antriebsrades 30 ausgebildet sein. Die Zugfeder 58 kann durch eine Druckfeder oder dergleichen ersetzt werden.

Im gezeigten Ausführungsbeispiel ist die Achse 24 nicht selbst in der Basisplatte gelagert, vielmehr ist das mit ihr verbundene Antriebsrad 30 direkt in der Basisplatte 20 mittels einer herausgedrückten Schulter 76 gelagert. Hierdurch wird Bauhöhe eingespart.

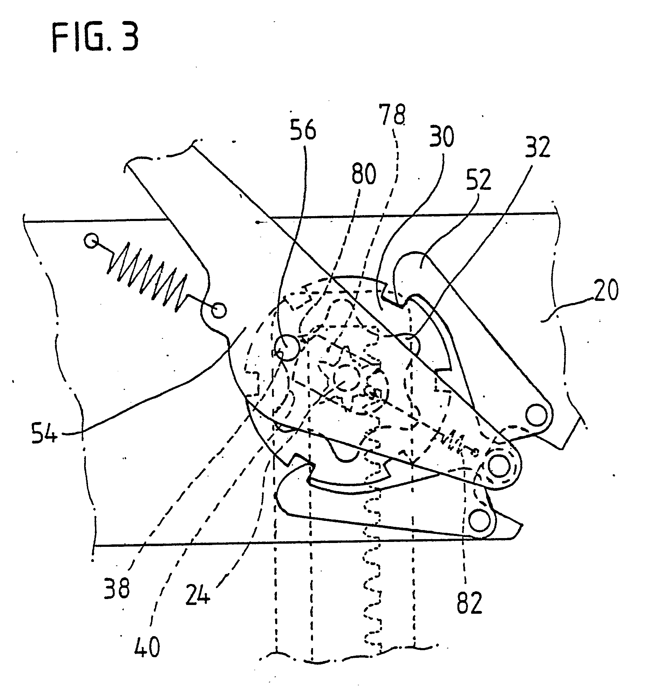

Im Ausführungsbeispiel nach Fig. 3 ist um die Achse 24 ein zweiarmiger Blockierhebel 78 frei-

schwenkbar gelagert. Sein einer Arm wird durch eine Blockierflanke 80 begrenzt, die auf einem Kreisbogen um die Achse 24 verläuft. An seinem andern Arm greift eine Zugfeder 82 an, die sich ihrerseits an der Basisplatte 20 abstützt. Sie zieht den Blockierhebel 78 in die in Fig. 3 eingezeichnete Normalstellung, in der sich in unmittelbarer Nähe der Innenseite des Zapfen 56 befindet, der in einer Bucht 38 des Antriebsrades 30 liegt. Durch den Blockierhebel wird vermieden, daß der Zapfen 56 aus der Bucht 38 herausrutschen kann.

Der Blockierhebel 78 hat im Bereich seiner Blockierflanke 80 eine Breite, die kleiner ist als der Abstand einer Verbindungslinie zwischen den Scheiteln zweier benachbarter Übergangsbereiche 40. Bei einer Bewegung des Verstellarms 54 aus der gezeigten Mittelstellung (Fig. 3) in eine Freigabe — oder Antriebstellung rutscht der Zapfen 56 auf der Blockierflanke 80 entlang, und gerät außer Kontakt mit der Blockierflanke 80. Nach einem Antrieb des Antriebsrades 30 durch den Zapfen 56 um 60° (Fig. 3) wird die erreichte Drehposition des Antriebsrades durch selbsttätiges Einrasten der Rastklinken 52 fixiert, der Verstellarm 54 wird nun in die in Fig. 3 gezeigte Stellung zurückbewegt. Hierbei drückt der Zapfen 56 seitlich gegen den Blockierhebel, wodurch dieser gegen die Wirkung seiner Zugfeder 82 verschwenkt wird, bis der Zapfen 56 in die benachbarte Bucht 38 eingegriffen hat. In diesem Zustand kann der Blockierhebel 78 wieder seine Normalstellung einnehmen.

**Patentansprüche**

1. Verstellvorrichtung mit Schrittschaltmechanik, insbesondere für eine Sitzhöhenverstellung oder Rückenlehnen-Neigungsverstellung von Kraftfahrzeugsitzen,
a) mit einer Basisplatte (20), in der eine Achse (24) gelagert ist,
- deren Drehposition bezüglich der Basisplatte (20) schrittweise verstellbar ist, und
- die mit einem Mitnehmerflanken (34, 36) aufweisenden Antriebsrad (30) verbunden ist, und
b) mit einem an der Basisplatte (20) bewegbar angeordneten Verstellarm (54),
- der mit einem Handhebel (60) verbunden ist,
- von einer ihn in seiner Mittelstellung haltenden Feder (58) beaufschlagt ist und
- einen Mitnehmer (56) aufweist, der beim Verschwenken des Handhebels (60) eine Mitnehmerflanke (34, 36) des Antriebsrades (30) mitnimmt und dadurch das Antriebsrad (30) dreht, dadurch gekennzeichnet, daß das Antriebsrad (30) Rastflanken (44, 46) aufweist, deren Anzahl gleich der Anzahl der Mitnehmerflanken (34, 36) ist, daß an der Basisplatte (20) mindestens eine Rastklinke (52) angelenkt ist, die durch eine Klinkenfeder in Richtung einer Anlage an eine Rastflanke (44, 46) vorbelastet ist und die eine von einer Steuerfläche (66) des Verstellarms (54) betätigbare Ausrastfläche (68) aufweist, und daß der Verstellarm (54) mit einem Führungsteil (62) in einer Führung (64) der Basisplatte (20) angeordnet ist, die den Bewegungsbereich des Verstellarms-(54) in der Zugrichtung der Feder (58) und die beiden Richtungen quer hierzu begrenzt, wobei in Mittelstellung des Verstellarms (54) der Mitnehmer (Zapfen 56) auf Grund der Wirkung der Feder (58) zwischen zwei benachbarten, eine Bucht (38) bildenden Mitnehmerflanken (34, 36) gehalten ist, die Rastklinke (52) eingerastet ist und der Verstellarm (54) um den Mitnehmer (56) als Drehpunkt verschwenkbar ist, in einer Freigabestellung der Verstellarm (54) mit seiner Steuerfläche (66) an der Ausrastfläche (68) der Rastklinke (52) anliegt, wodurch diese sich in Ausraststellung befindet und in einer Antriebsstellung das Führungsteil (62) an einem Seitenrand (72) der Führung (64) anliegt und einen Drehpunkt bildet, wobei der Zapfen (56) das Antriebsrad (30) dreht und mit fortschreitender Drehbewegung die Steuerfläche (66) die Ausrastfläche (68) freigibt, so daß die Rastklinke (52) mit einer nachfolgenden Rastflanke (44, 46) zusammenwirken und die erreichte Drehposition fixieren kann.

2. Verstellvorrichtung nach Anspruch 1, dadurch gekennzeichnet, daß in Mittelstellung des Verstellarms (54) die Zugrichtung der Feder (58), der Mitnehmer (56), die Achse (24) und das Führungsteil (62) in dieser Reihenfolge angeordnet sind und auf einer Geraden liegen.

3. Verstellvorrichtung nach Anspruch 1 oder 2, dadurch gekennzeichnet, daß die Mitnehmerflanken (34, 36) sich am Innenrand einer zentrischen, sternförmigen Ausnehmung (32) des Antriebsrades (30) befinden und durch abgerundete Übergangsbereiche (40) verbunden sind.

4. Verstellvorrichtung nach einem der Ansprüche 1 bis 3, dadurch gekennzeichnet, daß die Rastflanken (44, 46) sich am Außenrand des Antriebsrades (30) befinden und vorzugsweise als im wesentlichen rechteckige Rastbuchten (42) ausgebildet sind.

5. Verstellvorrichtung nach einem der Ansprüche 1 bis 4, dadurch gekennzeichnet, daß zwei Rastklinken (52) vorgesehen sind, von denen jede jeweils nur eine Drehrichtung blockiert und von denen jeweils nur eine bei in einer Freigabestellung befindlichem Verstellarm (54) ausgerastet ist, daß die Rastklinken (52) in Gegenrichtung zu ihrer Blockierrichtung eine Schrägfläche (74) aufweisen, und daß vorzugsweise die Rastklinken (52) klappsymmetrisch zur genannten Geraden angeordnet sind.

6. Verstellvorrichtung nach Anspruch 5, dadurch gekennzeichnet, daß die Breite eines Rastzahns der Rastklinke (52) kleiner ist als die Breite einer Rastbucht (42).

7. Verstellvorrichtung nach einem der Ansprüche 1 bis 6, dadurch gekennzeichnet, daß der Verstellarm (54) doppelarmig ausgebildet ist und daß ein Arm den Mitnehmer (56) trägt und der andere Arm das Führungsteil (62) aufweist.

8. Verstellvorrichtung nach einem der Ansprüche 1 bis 7, dadurch gekennzeichnet, daß das Führungsteil (62) eine Steuerfläche (66) bildet, und daß vorzugsweise das Führungsteil (62) als zylindrischer Zapfen ausgebildet ist.

9. Verstellvorrichtung nach einem der Ansprüche 1 bis 8, gekennzeichnet durch einen Blockierhebel (78), der um die Achse (24) schwenkbar angeordnet ist, eine Blockierflanke (80) aufweist und an dem eine Zugfeder (58) angreift, die ihn in eine Nullstellung vorbelastet, in der sich seine Blockierflanke (80) in unmittelbarer Nähe des Zapfens (56) befindet und dadurch eine Bewegung dieses Zapfens (56) aus seiner Bucht (38) blockiert, wobei die Blockierflanke (80) vorzugsweise auf einem Kreisbogen um die Achse (24) liegt.

**Claims**

1. Step by step adjustment device, especially for adjusting the height of a seat or the inclination of a backrest of a seat for motor vehicles, comprising

a) a base plate (20), in which an arbor (24) is arranged,

- whose angular position can be adjusted stepwise relative to the base plate (20), and
- which is fixed to a driving pulley (30) having driving flanks (34, 36), and

b) an actuating level (54) movably attached to the base plate (20), which lever

- is connected to a hand lever (60),
- is under the action of a spring (58) biassing the actuating lever (54) in a central position, and
- exhibits a catch (56) which when pivoting the hand lever (60) engages a driving flank (34, 36) of the driving pulley (30) and thereby turns the driving pulley (30), characterized in that the driving pulley (30) exhibits stop flanks (44, 46) which are present in the same amount as the number of driving flanks (34, 36), at least one locking catch (52) is linked to the base plate (20), which locking catch (52) is biassed by a locking spring in the direction of contact with one stop flank (44, 46) and exhibits a release web (68) actuated by a control area (66) of the actuating lever (54), and in that the actuating lever (54) is arrranged with a guiding piece (62), in a guidance (64) of the base plate (20) which guidance (64) limits the freedom of motion of the actuating lever (54) in the direction of pull of the spring (58) and in both directions oblique thereto, whereby in central position of the actuating lever (54) the catch (trunnion 56) is a held under the action of the spring (58) between two adjacent driving flanks (34, 36) forming an inlet (38), the locking catch (52) is engaged and the actuating lever (54) is pivotable around the catch (56) forming a center or rotation, the actuating lever (54) in a release position rests against the release web (68) of the locking catch (52), whereby the locking catch (52) assumes the release position and a guiding piece (62) rests in a driving position against a lateral edge (72) of the guidance (64) and forms a center of rotation, by which the catch (56) drives the driving pulley (30) and the control area (66) releases the release web when the rotating movement continues, so that the locking catch (52) can cooperate with a subsequent stop flank (44, 46) and fix the rotating position reached.

2. Adjustment device as in claim 1, characterized in that in the center position of the actuating lever (54) the direction of pull of the spring (58), the catch (56), the arbor (27) and the guiding piece (62) are arranged in this sequence and lie on a straight line.

3. Adjustment device as in claim 1 or 2, characterized in that the driving flanks (34, 36) are arranged at the inner border of a centric and star-shaped recess (32) of the driving pulley (30) and are connected by rounded change-over regions (40).

4. Adjustment device as in one of the claims 1 to 3, characterized in that the stop flanks (44, 46) are arranged at the outer margin of the driving pulley (30) and preferably are formed as essentially rectangularly-shaped stop inlets (42).

5. Adjustment device as in one of the claims 1 to 4, characterized in that two locking catches (52) are provided, each of which locks in one direction of rotating only and of which only one respectively is released when the actuating lever (54) is in the release position, in that the locking catches (52) exhibit an incline (74) in the direction opposed to their direction of locking, and in that the locking catches (52) preferably are arranged mirror-symmetrically to the above mentioned straight line.

6. Adjustment device as in claim 5, characterized in that the width of the locking tooth of the locking catch (52) is smaller than the width of a stop inlet (42).

7. Adjustment device as in one of the claims 1 to 6, characterized in that the actuating lever (54) has two arms and in that one arm carries the catch (58) and the other arm exhibits the guiding piece (82).

8. Adjustment device as in one of the claims 1 to 7, characterized in that the guiding piece (62) forms a control area (66), and in that preferably the guiding piece (62) is formed as a cylindrical trunnion.

9. Adjustment device as in one of the claims 1 to 8, characterized by a locking arm (78) which is pivotable around the arbor (24), exhibits a locking flank (80) and is under the action of the spring (58) biassing the locking arm (78) in a neutral position, in which its locking flank (80) is immediately close to the catch (56) and thereby blocks a movement of this catch (56) out of its inlet (38), whereby the locking flank (80) preferably is arranged on a circular line around the arbor (24).

**Revendications**

1. Dispositif de réglage à mécanisme de positionnement pas à pas, en particulier pour le réglage en hauteur de l'assise ou de l'inclinaison du dossier de sièges de véhicules automobiles, comprenant

a) une plaque de base (20) dans laquelle est monté un axe (24)

- dont la position angulaire par rapport à la plaque de base (20) est réglable pas à pas et

- qui est relié à une roue de commande (30) présentant des flancs d'entraînement (34, 36), ainsi que

b) un bras de réglage (54) disposé mobile sur la plaque de base (20), bras qui

- est relié à une manette (60),

- est sollicité par un ressort (58) tendant à le maintenir à sa position médiane, et

- présente un élément d'entraînement (56) qui, lors du pivotement de la manette (60), entraîne un flanc d'entraînement (34, 36) de la roue de commande (30) et fait ainsi tourner la roue de commande (30), caractérisé en ce que la roue de commande (30) présente des flancs d'arrêt (44, 46) dont le nombre est égal au nombre des flancs d'entraînement (34, 36), qu'au moins un cliquet d'arrêt (52) est articulé sur la plaque de base (20), cliquet qui est chargé par un ressort de cliquet en direction de l'application contre un flanc d'arrêt (44, 46) et qui présente une surface de décliquetage (68), sur laquelle peut agir une surface d'actionnement (66) du bras de réglage (54), et que le bras de réglage (54) est disposé par une partie de guidage (62) dans un guide (64) de la plaque de base (20), guide qui limite la zone de mouvement du bras de réglage (54) dans la direction de tirage du ressort (58) et dans les deux sens transversaux à cette direction, l'agencement étant tel, lorsque le bras de réglage (54) occupe la position médiane, l'élément d'entraînement (tenon 56) est maintenu, sous l'action du ressort (58), entre deux flancs d'entraînement (34, 36) voisins, formant une échancrure (38), le cliquet (52) est encliqueté et le bras de réglage (54) peut pivoter autour de l'élément d'entraînement (56) comme point de rotation, le bras de réglage (54), à une position de déverrouillage, s'appliquant par sa surface d'actionnement (66) contre la surface de décliquetage (68) du cliquet (52), de sorte que celui-ci se trouve en position décliquetée, et la partie de guidage (62), à une position de commande, étant appliquée contre un bord latéral (72) du guide (64) et formant un point de rotation, le tenon (56) faisant tourner la roue de commande et la surface d'actionnement (66), à mesure que le mouvement de rotation progresse, libérant la surface de décliquetage (68), de sorte que le cliquet (52) peut coopérer avec un flanc d'arrêt (44, 46) suivant et peut fixer la position angulaire atteinte.

2. Dispositif selon la revendication 1, caractérisé en ce que, à la position médiane du bras de réglage (54), la direction de tirage du ressort (58), l'élément d'entraînement (56), l'axe (24) et la partie de guidage (62) sont disposés dans cet ordre sur une droite.

3. Dispositif selon la revendication 1 ou 2, caractérisé en ce que les flancs d'entraînement (34, 36) sont situés sur le bord intérieur d'un évidement central (32) en forme d'étoile de la roue de commande (30) et sont reliés entre eux par des zones de transition (40) arrondies.

4. Dispositif selon une des revendications 1 à 3, caractérisé en ce que les flancs d'arrêt (44, 46) sont situés sur le bord extérieur de la roue de commande (30) et sont réalisés de préférence comme des échancrures d'arrêt (42) essentiellement rectangulaires.

5. Dispositif selon une des revendications 1 à 4, caractérisé en ce qu'il comporte deux cliquets d'arrêt (52), bloquant chacun seulement un sens de rotation et dont l'un seulement est décliqueté lorsque le bras de réglage (54) occupe une position de déverrouillage, que les cliquets (52) présentent une surface oblique (74) en direction contraire au sens de blocage et que, de préférence, les cliquets (52) sont disposés à symétrie de basculement de part et d'autre de ladite droite.

6. Dispositif selon la revendication 5, caractérisé en ce que la largeur d'une dent d'arrêt du cliquet (52) est inférieure à la largeur d'une échancrure d'arrêt (42).

7. Dispositif selon une des revendications 1 à 6, caractérisé en ce que le bras de réglage (54) est un bras double, dont l'un porte l'élément d'entraînement (56) et dont l'autre présente la partie de guidage (62).

8. Dispositif selon une des revendications 1 à 7, caractérisé en ce que la partie de guidage (62) forme une surface d'actionnement (66) et que, de préférence, la partie de guidage (62) est réalisée comme un axe cylindrique.

9. Dispositif selon une des revendications 1 à 8, caractérisé en ce qu'il comporte un levier de blocage (78), disposé pivotant autour de l'axe (24), qui présente un flanc de blocage (80) et est attaqué par un ressort de traction (58) qui rappelle ce levier à une position zéro, où son flanc de blocage (80) est situé à proximité immédiate du tenon (56) et bloque de ce fait le mouvement de ce tenon (56) hors de son échancrure (38), le flanc de blocage (80) étant situé, de préférence, sur un arc de cercle autour de l'axe (24).

FIG.1

FIG.2

II

38
34 36
32
24 30
52
54
40
68
22
72
66
62
58
20
48
64
56
50
74
28
70
44 46
42
II

30
70
76
26
28
24
32
52
50
60

0 116 964

FIG. 3